# EUROPEAN PATENT SPECIFICATION

(11) **EP 3 180 972 B1**
(45) Date of publication and mention of the grant of the patent: **06.03.2019**
(21) Application number: 16201919.4
(22) Date of filing: 02.12.2016
(51) Int. Cl.: A01C 7/16, A01C 7/10, B65G 33/14

(54) **SMART FIT DOSAGE MECHANISM WITH DEVICES ADAPTABLE TO SOLID PARTICLE DISPENSER**
INTELLIGENTE DOSIERUNGSVORRICHTUNG MIT AN EINEN FESTSTOFFPARTIKELSPENDER ANPASSBAREN VORRICHTUNGEN
MÉCANISME DE DOSAGE D'AJUSTEMENT INTELLIGENT AVEC DES DISPOSITIFS ADAPTABLES À UN DISTRIBUTEUR DE PARTICULES SOLIDES

(30) Priority: 15.12.2015 BR 102015031455
(43) Date of publication of application: 21.06.2017
(73) Proprietor: Agromac Industria e Comercio de Equipamentos Agricolas Ltda EPP, 99025-040 Passo Fundo - RS (BR)
(72) Inventor: GRANDO MARTINS, Daniel, 99025-040 Passo Fundo - RS (BR)
(74) Representative: Baldi, Claudio

(56) References cited:
- WO-A1-2015/055996
- FR-A- 1 232 497
- GB-A- 817 344
- US-A- 3 822 809

## Description

### Field of Invention

This invention application consists on a smart fit dosage mechanism with devices adaptable to a solid particle dispenser, such as the ones used for seeds, fertilizers and correctives, which aims at reducing the volume of the dosage of solid particles and facilitating the dosing of a product with low granulometry, ground and/or powder, to be applied by the dispenser. This innovative technology can be applied in pulverizers, sprays and in precision dispensers for fertilizers, correctives and other solid low granulometry products used in agriculture and other segments. This technology promotes more efficiency in the dosage of solid products for crops, minimizing the cost with fertilizing, and also avoiding the inappropriate use of fertilizers that could harm the environment. Furthermore, this technology allows adapting dispensers for seeds, fertilizers, correctives and other traditional solid products for solid products with low granulometry without the need of replacing the dispenser; but just adapting the dosage adjustment mechanism according to the type of granulometry of the product and the accurate quantity of dosage.

### Status of Technique

With the advent of precision agriculture, the need of applying the exact amount of fertilizers and correctives, among other products of low granulometry for crops, at the right moment, gained more emphasis. Currently, with the development of high-efficiency fertilizers, also known as "smart" or "nano-fertilizers", and other low-granulometry highly-concentrated correctives, whose dosing should be reduced in comparison with traditional fertilizers and correctives, high precision has become of the essence.

Casão Junior (CASÃO JUNIOR, R. Plantadeiras - Equipamento bom é aquele bem preparado Revista A Granja, 694, p.32-35, 10/2006) stresses that the dosing mechanisms for fertilizers, in some cases, may not be accurate, causing an irregular and undesired distribution of fertilizers through the soil. On the one hand, this irregularity may result in overdosing and, on the other, it may result in the lack of application when, for instance, no grain of fertilizer is launched on the soil.

According to the literature (GARCIA, A.P. et al. Caracterização de um mecanismo dosador helicoidal de fertilizantes solidos. In: XXXV Congresso Brasileiro de Engenharia Agricola. Anais.João Pessoa - PB, July 31 to August 4, 2006), the overdosing of fertilizers is highly harmful to the environment, in addition to representing a waste of energy and investment for the agriculturists.

A field researched executed by Instituto Federal - Campus Sertão/RS assessed the efficiency of the use of a worm gear dispenser with the concept of discharge by gravity. As a result, it was observed that a machine, applying the dosage of 200kg per hectare of fertilizer, with a floor speed around 2km/h stops the release of fertilizers every 4.2 meters and restarts after 0.73m. Therefore, in a trajectory of 100 meters, about 14.89 linear meters do not receive a single grain of fertilizer. In the case of the cultivation of soy, with 14 plants per meter, approximately 208 plants can only rely on the natural fertility of the soil, considering that 15% of the area does not receive the fertilizer.

In practice, the performance of fertilizer dispensers is affected by several sources of variation. According to the literature, when assessing two worm gear dispensers, it has been observed that the longitudinal inclinations altered the flow of the dispensers assessed and, also, that the variation depended on the drive speed of the equipment (FERREIRA, M.F.P. et al Uniformidade de vazão de fertilizantes por dosadores helicoidais em função do nivelamento longitudinal. Engenhariana Agricultura, v.18, pp. 297-304, 2010).

As described in the status of technique of the document BRPI0303586-7A, the worm gear dispensers with concept of discharge by gravity release the fertilizers in pulses, causing lack of uniformity along the seeding line, which causes losses to the cultivation. This situation becomes more severe when the speed of the planter is increased, suffering influence from variables like trepidation, dispenser speed and others.

The status of technique presents fertilizer dispensers that promote the regularity in the distribution of the fertilizer along the seeding line. Through these technologies, the fertilizer is actuated by the driver and conducted to a damming chamber. Then, it overflows in uniform and homogenous volumetric amounts through the level regulator, to the discharge nozzle and then, to the soil, using the concept of discharge by overflow, discharge by spill or similar.

In this sense, the document BRPI0205032-3 describes a perfected worm gear fertilizer and/or corrective dispenser that provides a uniformity standard for the distribution of fertilizers and correctives along the seeding lines, including removable and interchangeable level regulators perpendicular to the drive shaft. Furthermore, the document BRPI0402211-4 describes a perfected worm gear fertilizer or corrective dispenser BRPI0303586-7A.

In the previous techniques, the variations are eliminated by neutralizing the pulse and the effects of the pace of the helical helix, because the thread is always filled with fertilizer, transporting the same amount regardless of the cycle and the topographic variations of the crop. This accurate and homogenous distribution of fertilizers favors cultivation and avoids waste, as well as it eliminates the pulses.

However, once the new smart fertilizers, in addition to requiring a reduction in dosing, present low granulometry, it becomes necessary to adapt the dispensers so as to ensure the efficiency in the dosing of fertilizers, correctives and other low-granulometry products, ground and powder. Therefore, it is not enough to develop a technology that ensures the reduction of the volume of the product to be applied in the soil; it must also ensure uniformity when releasing the low-granulometry fertilizer. Thus, the technology, in addition to promoting higher efficiency in the dosing of solid products for crops, also avoids the excessive use of smart, highly concentrated fertilizers, which may harm the environment.

According to the MINISTRY OF AGRICULTURE AND FOOD SUPPLIES, SECRETARIAT FOR THE DEFENCE OF AGRIBUSINESS AND LIVESTOCK RAISING, NORMATIVE INSTRUCTION N° 25, FROM JULY 23, 2009, ANNEX I, CHAPTER III, Section I, Art. 3rd, §1st, Item I, we have as Physical Nature, fertilizers from Thick Ground with grain size ranging from 4.8mm (ABNT N° 4) to 1.0mm (ABNT N° 18) until Powder with grain size between 2mm (ABNT N° 10) and 0.3mm (ABNT N°50).

WO 2015/055966 A1 discloses a metering system to meter particulate material at varying rates from a storage source such as a hopper to a transport and distribution system including a pneumatic transport system, for example in an agricultural distribution machine such as a seed drilling apparatus, and to an agricultural distribution machine such as a seed drilling apparatus incorporating such a metering system.

GB 817 344 A discloses a device for conveying discrete material such as grain. Grain is conveyed through a cylindrical conduit made of polythene by a rotatable metal spiral formed from strip of square cross-section, deformation of which during operation is resisted by a tension wire passed axially therethrough and connected thereto only at its end.

US 3 822 809 A discloses an apparatus for metering loose products such as powder or granules, comprising co-axial metering and compensating worms rotatable in a casing from which the metering worm delivers product into a delivery tube.

FR 1 232 497 A discloses a device for dispensing solid material, which comprises controlled feed means, and a screw disposed horizontally inside a cylindrical duct which is angularly movable around its axis. The duct having, at least, a longitudinal opening of length at most equal to that of said screw and of sufficient width to ensure total evacuation of said duct at each passage of said opening to the lower part of the device, the rotational speed of said screw, and the displacement of said conduit opening, being such that said material is conveyed and substantially distributed over the entire length of said conduit.

### Invention Abstract

These problems are solved with the present invention, which is characterized for presenting a SMART FIT dosage mechanism WITH DEVICES ADAPTABLE TO A SOLID PARTICLE DISPENSER, used for fertilizers, correctives and other products. This mechanism is characterized for having a reducer device, a propeller device and a stabilizer device. The smart fit dosage mechanism is defined in the independent claim 1.

The mechanism of the present invention aims, in a preferential realization, at reducing the volume of the dosage of solid particles and facilitating the dosing of a product with low granulometry, ground or powder, to be applied by the dispenser. Thus, the object of the present invention is to provide accurate dosages with low volumes of solid particles, especially those with low granulometry, fully satisfying the requirements for application in a variable rate in the seeding line, especially smart fertilizers and correctives.

These and other objects of the present invention are much better understood and valued through the brief description of the figures and the detailed description of the invention, as follows, and the claims attached.

### Brief Description of the Figures.

In order to better describe the technical characteristics of the smart fit mechanism with devices adaptable to solid particles dispenser, next will be presented figures that serve as an example to illustrate some technical aspects of the invention:

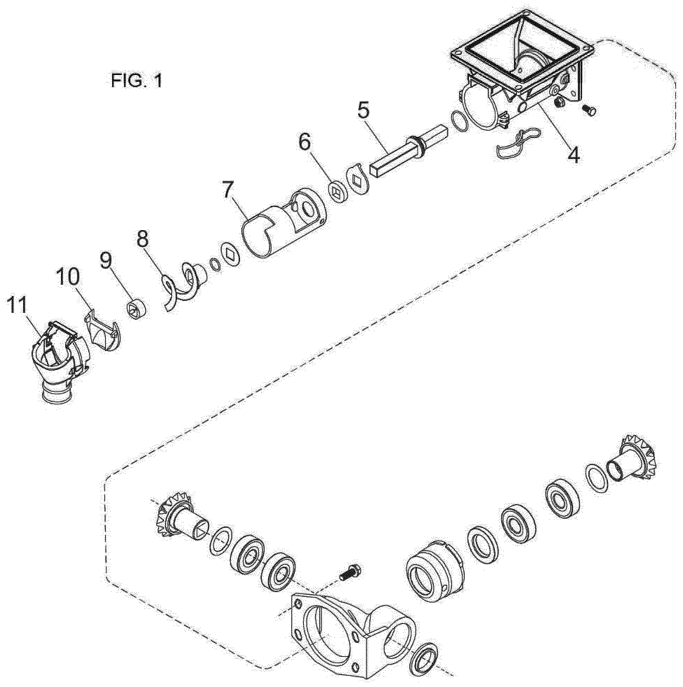

Figure 1 presents an illustrative schematic representation of the exploded view from a worm gear dispenser, in which: (4) body of the dispenser; (5) drive shaft; (6) felt; (7) internal coating; (8) worm gear; (9) lock ring; (10) transversal cap; (11) nozzle.

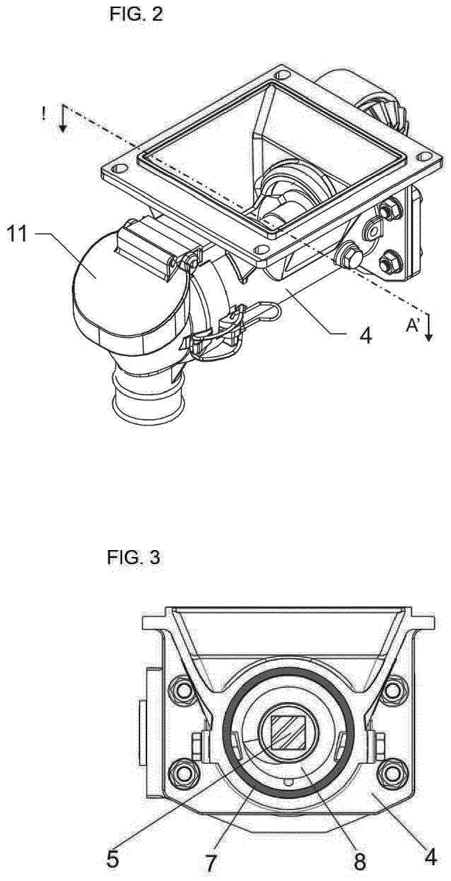

Figure 2 presents an illustrative schematic representation of the mounted view of a worm gear dispenser, highlighting the slitter line A-A, which contributes for understanding Figure 3.
Figure 3 presents an illustrative schematic representation of the cut A-A of a worm gear dispenser, in which: (4) body of the dispenser; (5) drive shaft; (7) internal coating; (8) worm gear.

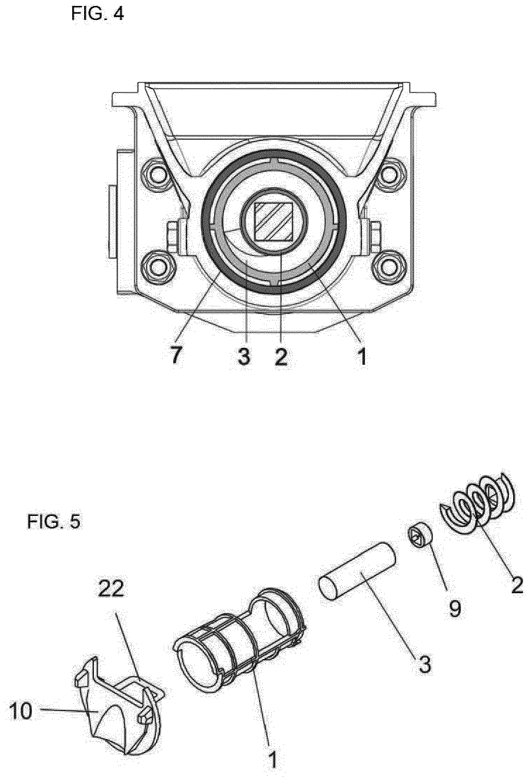

Figure 4 presents an illustrative schematic representation of the cut A-A of a worm gear dispenser with view in cut A-A with devices of the smart fit mechanism coupled, as per the present invention, in which: (1) reducer device; (2) stabilizing device; (3) propeller device; (7) internal coating.
Figure 5 presents an illustrative schematic representation of the exploded view of the smart fit mechanism with devices adaptable to solid particles dispenser, as per the present invention, in which: (1) reducer device; (2) propeller device; (3) stabilizer device; (9) lock ring; (10) transversal cap; (22) clamp.

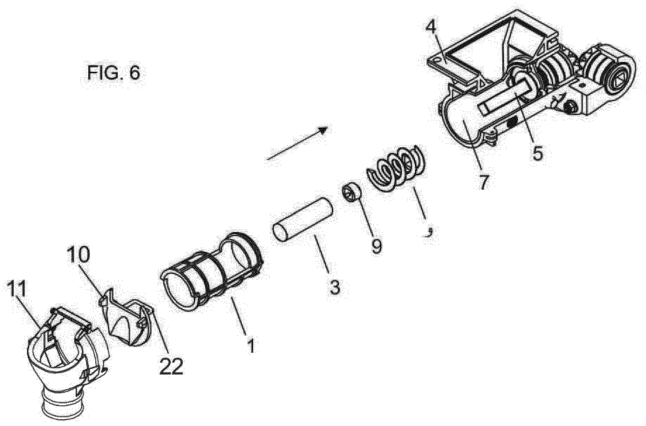

Figure 6 presents an illustrative schematic representation of the partially exploded view of the worm gear dispenser modified to enable coupling of the devices from the smart fit mechanism, as per the present invention, in which: (1) reducer device; (2) propeller device; (3) stabilizer device; (4) body of the dispenser; (5) drive shaft; (7) internal coating; (9) lock ring; (10) transversal cap; (11) nozzle; (22) clamp.

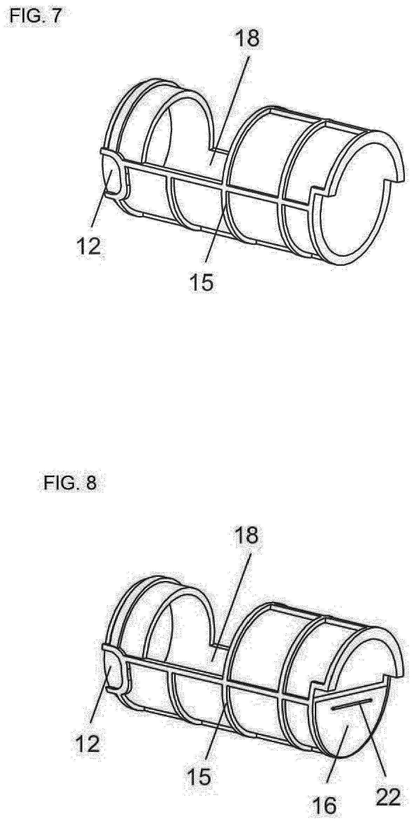

Figure 7 represents an illustrative schematic representation of the tridimensional view of the reducer device (1), as per the present invention, in which: (12) blocking fitting; (15) external wall; (18) internal wall.
Figure 8 presents an illustrative schematic representation of the tridimensional view of an alternative setting of the reducer device (1), as per the present invention, in which: (12) blocking fitting; (15) external wall; (16) perpendicular barrier; (18) internal wall; (22) clamp.

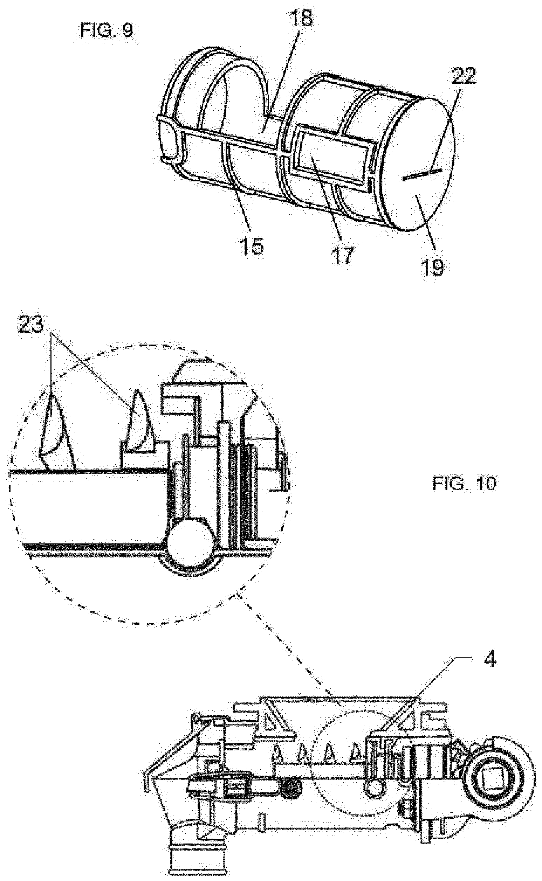

Figure 9 presents an illustrative schematic representation of the tridimensional view of an alternative setting of the reducer device (1), as per the present invention, in which: (15) external wall; (17) parallel opening; (18) internal wall; (19) front wall; (22) clamp.
Figure 10 presents a partial approximate illustrative schematic representation of the propeller device (2), as per the present invention, in which: (23) helix.

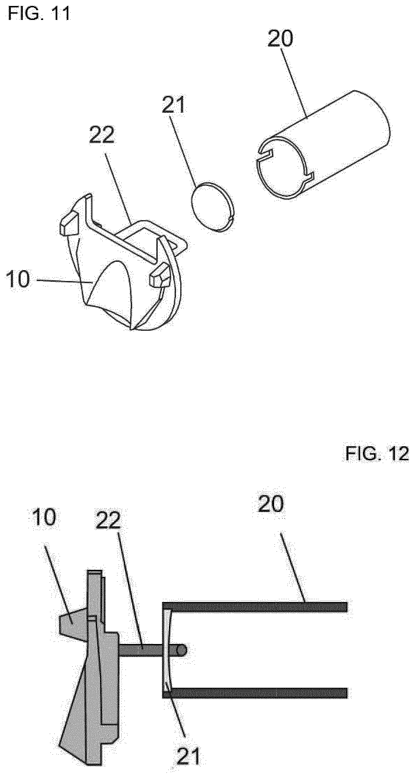

Figure 11 presents an illustrative schematic representation of the exploded tridimensional view of the stabilizer device (3) as per the present invention, in which: (10) transversal cap of the dispenser; (20) tubular base; (21) tubular cap; (22) clamp.
Figure 12 presents an illustrative schematic representation of the bidimensional lateral view of the stabilizer device (3), as per the present invention, in which: (10) transversal cap of the dispenser; (20) tubular base; (21) tubular cap); (22) clamp.

### Detailed description of the Invention.

The preferential details and examples reported next aim at facilitating the reproduction of the invention and, therefore, must be understood as merely illustrative without so restraining the scope of the invention.

The smart fit mechanism with devices adaptable to solid particles dispenser, as per the present invention, aims at reducing the volume of the fertilizer transported in a volumetric dispenser for fertilizers and other types of solid particles, including low-granulometry particles (e.g. smart fertilizers), as, for instance, worm gear dispensers. In order to do so, the mechanism has a set of devices that are adaptable to the dispensers of the status of technique without it being necessary to replace the dispensers for a new dispenser specific for low doses of fertilizers and application uniformity.

The solution proposed includes a reducer device (1) combined with a propeller device (2) for the solid particles and a stabilizer device (3), whose function is to stabilize the flow of the product dosed.

Due to the great variety of fertilizers, manures and other types of correctives in the form of solid particles, both in chemical representation as in physical form, it is necessary that these devices composing the mechanisms have variable forms and measures so as to satisfy the proposed requirements.

The smart fit dosage mechanism with devices adaptable to a solid particles dispenser is characterized for presenting: reducer device (1), propeller device (2) and stabilizer device (3).

The mechanism regards the reducer device (1), which is fitted in the internal part of the body of the dispenser (4). In the case of dispensers with internal coating (7), the reducer device is couple to this part of the dispenser internally. In some types of worm gear dispensers, at the status of technique, there is a chamber of the worm gear that has fixed diameter and, according to its characteristic, where the reducer device (1) is fitted, decreasing this diameter and causing a reduction in the volume of the fertilizer do be dosed.

The reducer device (1) has external diameter proportional to the internal dimension of the body of the dispenser. Therefore, the size and the shape of the reducer device (1) to be coupled to the dispenser follow the diameter and the internal format of the body of the dispenser (4).

If the dispenser has coupled internal coating (7) or other sort of device, the internal dimension of the dispenser shall be calculated considering the form and the size of this coating (7) so as to adjust the reducer device (1) without causing spaces between the walls of the elements that may generate movement or spots for the accumulation of particles.

Thus, the reducer device for the flow of solid particles is positioned and fitted in the internal part of the dispenser, with or without coating. This reducer device (1) is characterized for presenting preferentially cut-out edges and lateral surface with diameter smaller than the diameter of the internal wall of the body of the dispenser (4) or the internal coating of the dispenser (7), with lateral surface juxtaposed to the internal lateral surface of the body (4) or the internal coating (7) of the dispenser.

In addition to the variable external diameter of the reducer device (1), to enable its proper coupling to the dispenser, in a preferential realization of the invention, the smart fit mechanism characterizes for including a reducer device (1) with variable internal diameter. The internal diameter of the reducer device (1) will be adjusted according to the dosage and with the type and granulometry of the solid particles to be used (dosed) in the equipment.

In a preferential realization of the invention, the smart fit mechanism is characterized by the fact that the reducer device (1) presents cut-out edges and walls, according to the type of dispenser and the respective flow of particles in its interior until its exit through nozzle (11).

In the worm gear dispensers guided by a central shaft (5) which is responsible for transferring the circular movement originated in the transmission of the equipment used for the worm gear, it is necessary that the reducer device (1) has cut-out edges to execute the coupling between the bottom or the initial area for capture of solid particles (e.g. fertilizer) to its area of discharge.

In an alternative realization of the invention, the smart fit mechanism may contain a reducer device (1) with cut-out edges and walls, being that one of the edges may present a barrier (16) that is perpendicular to the drive shaft (5), so as to provide more efficiency in the overflow or spillage, including in conventional dispensers such as the dispenser by gravity.

In another alternative realization of the invention, the smart fit mechanism may contain a reducer device (1) with one of the edges and walls cut-out, and one of the edges closed with the front wall (19) and with an opening (17) that is parallel to the drive shaft (5). This alternative realization of the reducer device (1) with a parallel opening (17) implies in the closing of one of the edges with the front wall (19) to work in dispensers with lateral overflow.

The alternative models of the reducer device (1) may have diverse dimensions and formats according to the type of dispenser, and considering the quantity of the dosing and the type of particle granulometry.

In the worm gear dispensers with discharge frontal/transversal to the drive shaft (5) of the worm gear or lateral/parallel to the drive shaft (5) it is not necessary that both edges of the reducer device are cut-out. In this sense, the use of a perpendicular barrier or a parallel opening, respectively, presents higher efficiency regarding the correction of the pulsating effect of the cycle of the worm gear, for instance, as described in the document BRPI0205032-3. The barrier may have different dimensions according to the physical characteristics of the particles (e.g. fertilizer), always aiming to increase the efficiency of the distribution.

In a preferential realization of the invention, the smart fit mechanism is characterized by for the reducer device (1) being flat in its internal wall (18) and preferentially presenting ribs in its external wall (15) which go around the whole periphery of the device. The external wall may also have a flat external wall, according to the thickness of the reducer device (1), especially if it is not very thick. If the desired thickness of the wall cannot be deformed, the ribs are unnecessary.

The reducer device (1) has as characteristic the reduction of the volume of the solid particles (e.g. fertilizer) transported through the variation of its diameter. When this variation of diameter is of few millimeters, it may be obtained by the thickness of the reducer device's wall. Depending on the type of material used and the thickness desired, it may cause shrinkage or bubbles on the walls. To avoid such imperfections, one can perform intermittent relief actions, causing ribs in the external wall (15).

In a preferential realization of the invention, the smart fit mechanism is characterized for the reducer device (1) having a block fitting (12) which, when coupled to the body of the dispenser, creates a mechanism that blocks the movement of the reducer device (1), especially when the dispenser is being used.

In a preferential realization of the intervention, the smart fit mechanism is characterized for having a propeller device (2) with helical helix, presenting a variable diameter. In a preferential realization of the invention, the diameter of the propeller device (2) is variable and compatible with the measure of the internal wall (18) of the reducer device (1) and the external measure o the tubular base (20) of the stabilizer device (3).

In worm gear dispensers, the propeller device (2) is fixed at the worm gear to a drive shaft (5) connected to a solid particles (e.g. fertilizer) dispenser. The propeller device presents a set of coating that fully involves the helices (23) to avoid contact and the wearing of the helices (23) and the walls of the reducer device (1). Its size, diameterand spacing are variable according to the granulometry and the dosage of the solid product to be dosed.

Due to the great diversity of solid particles (e.g. seeds, fertilizers, manures, correctives, etc.) as to their physical form and mainly their granulometry, it is necessary to control the fluidity of this fertilizer. This fluidity can be controlled as per the internal dimension of the reducer device (1) in relation to the external diameter of the propeller device (3), where the distance between those must be adequate to the granulometry of the solid particle.

In a preferential realization of the invention, the smart fit mechanism is characterized by the propeller device (2) having a helical form with flat service in comparison with the worm gear, because of the part's aerodynamics. The helical form of the propeller device (2) also facilitates the transportation of the fertilizer in the desired for when driven by the shaft (5) responsible for transferring the axial movement.

For more efficiency in the flow and control of the dosage of solid particles (e.g. fertilizer), it is necessary that the contact face responsible for conduction is flat. To improve the accommodation of the grains of fertilizer between the internal diameter of the helical conducer and the external wall of the stabilizer device, depending on the physical form of the fertilizer, it is necessary that the other side of the flat face is shaped as a semicircle, facilitating the runoff and improving the spatial accommodation of the smaller grains and also reducing the friction and area of contact between the propeller device and the stabilizer device.

In a preferential realization of the invention, the smart fit mechanism is characterized for presenting a propeller device (2) with a variable distance between the helices, depending on the type of dispenser, as well as the granulometry and dosage of the product to be dosed. So that the dosage of the solid particles (e.g. fertilizer) is homogenous, according to the classification of granulometry and the volume desired for dosage, it may be necessary to have a propeller device with variable space between the helices between the reducer device (2) and the stabilizer device (3), for usually the fertilizers with lower granulometry result in higher weight and smaller physical volume.

In an alternative realization of the invention, the helical propeller device (2) may be replaced by a worm gear nut adapted to the measures of the smart fit mechanism; however, once the conventional worm gear is triangular, the efficiency of the MECHANISM is comparatively reduced.

In a preferential realization of the invention, the smart fit mechanism is characterized for presenting a preferentially cylindrical stabilizer device (3). This device, in addition to providing stability for the flow of solid particles until they are released by the dispenser, avoids the crusting of particles. Provided that the steadiness of the application is determined by spiral-like cylindrical movements, the stabilizer device is cylindrical, whose form avoids the crusting of the fertilizer in its external wall, also avoiding that the solid particles flow in an oblong way or that the reach the dispenser's discharge nozzle (11) intermittently.

In a preferential realization of the invention, the smart fit mechanism is characterized for presenting a rigid or flexible stabilizer device (3), according to the physical condition of the product used, avoiding crusting in the mechanism.

Due to the lack of room to correctly store the fertilizer, for instance, many times the agriculturist leaves his/her fertilizer unprotected against humidity and even subject to rainfalls. The chemical elements present in most formulations of fertilizers are characterized for absorbing water until complete solubilization, serving as food for the plant when in the soil. However, when exposed to a certain level of humidity, the fertilizer may become abrasive. In this case, it is necessary that the stabilizer device presents certain flexibility to also avoid the crusting of the solid particles. If it is determined that the fertilizer is in its ideal condition for application as recommended by the manufacturer, for instance, the stabilizer device (3) must be rigid for higher efficiency.

In a preferential realization of the invention, the smart fit mechanism is characterized for presenting a stabilizer device (3) with external diameter varying according to the dimensions of the propeller device (2). The device, used so as the helices (23) do not present dragging and the external wall of the tubular base (20) of the stabilizer (3), may cause an alteration of the dose of the solid product, forming a self-cleaning system. Due to the variation in the dimensions of the propeller device (2) being related to the several granulometries of solid particles, it is necessary that the external diameter of the stabilizer device (3) is also variable so as to become a self-cleaning system.

In a preferential realization of the invention, the smart fit mechanism is characterized for the stabilizer device (3) presenting tubular form (20) with retention cap (21) and clamp (22) in one of the edges and open finishing in another one of the edges.

In worm gear dispensers with single bearing, the stabilizer device (3) may contain a clamp (22) whose function is to fixate the devices composing the smart fit mechanism in the correct position for use thus avoiding their dislocation, provided that the strength of the dislocation of solid particles is circular. According to the dimensional setting of the stabilizer device (3) regarding the propeller device (2) and the solid particles to be used, it is necessary that the stabilizer device (3) is locked, avoiding the circular movement and not being involved in the axial movement of the propeller device (2).

Alternatively, the mechanism, which is not part of the scope of the claimed invention, can also function without the presence of the stabilizer device (3), containing only the reducer device (1) and the propeller device (2). However, in this alternative setting, the tests of the mechanism indicate reduced efficiency in terms of performance when it comes to solid particles presenting very low granulometry.

The invention was described herein in a broad and generic way. Each of the species and sub-generic groups that fit the description are also part of the invention. The invention described herein in an illustrative way may be properly practiced in the absence of any element or elements, limitation or limitations not necessarily described herein. The terms and expressions were applied as terms of description, and not limitation, and there is no intention to, with the use of such terms and expressions, exclude any equivalents of the characteristics showed and described or their portions, but it is acknowledged that many modifications within the scope of this invention are possible as defined by the claims.

## Claims

1. Smart fit dosage mechanism with devices adaptable to a solid particle dispenser (4) having a body and a drive shaft, wherein the mechanism comprises a reducer device (1) combined with a propeller device (2) and a stabilizer device (3),
wherein the reducer device (1) has an external diameter proportional to the internal dimension of the body of the dispenser (4); so that the size and the shape of the reducer device (1) to be coupled to the dispenser (4) follow the diameter and the internal format of the body of the dispenser (4);
the smart fit dosage mechanism comprising:
- the propeller device (2) connected to the drive shaft (5) of the dispenser,
- the reducer device (1) coupled to an internal part of the body of the dispenser (4) around to said propeller device (2) in order to reduce the space between the propeller device and the body of the dispenser, and
- the stabilizer device (3) **characterised by** the stabilizer device disposed into the propeller device (2) fixed to a nozzle (11) and disposed into the propeller device (2) to stabilize the flow of the product dosed.

2. Smart fit dosage mechanism according to claim 1, **characterized in that** the dispenser (4) comprises the nozzle (11) fixed to the body.

3. Smart fit dosage mechanism according to anyone of the preceding claims, **characterized in that** said reducer device (1) has cut-out edges, walls and a smooth internal wall (18).

4. Smart fit dosage mechanism according to anyone of the preceding claims, **characterized in that** said reducer device (1) has a barrier (16) perpendicular to the drive shaft (5) of the dispenser.

5. Smart fit dosage mechanism according to anyone of the preceding claims, **characterized in that** said reducer device (1) has one edge closed with a front wall (19) and wall cut-out, and an opening (17) parallel to the drive shaft (5) of the dispenser (4).

6. Smart fit dosage mechanism according to anyone of the preceding claims, **characterized in that** said reducer device (1) has ribs on its external wall (15) that circle the whole periphery of an internal coating (7) of the dispenser (4).

7. Smart fit dosage mechanism according to anyone of the preceding claims, **characterized in that** said reducer device (1) comprises a block fitting (12) that makes it possible to block the movement of the reduced device when the reduced device is in use.

8. Smart fit dosage mechanism according to anyone of the preceding claims, **characterized in that** said propeller device (2) has helical form, with diameter compatible with the measure of an internal wall (18) of the reducer device (1) and the external measure of a tubular base (20) of the stabilizer device (3).

9. Smart fit dosage mechanism according to anyone of the preceding claims, **characterized in that** said propeller device (2) with helical form has flat face, semicircular profiled helices (23).

10. Smart fit dosage mechanism according to anyone of the preceding claims, **characterized in that** said propeller device (2) has variable distance between the helices (23).

11. Smart fit dosage mechanism according to anyone of the claims 1 to 6, **characterized in that** said propeller device (2) comprises a worm gear nut.

12. Smart fit dosage mechanism according to anyone of the preceding claims, **characterized in that** said stabilizer device (3) has a cylindrical form.

13. Smart fit dosage mechanism according to claim 12, **characterized in that** said stabilizer device (3) has a tubular form (20) with a retention cap (21) and a clamp (22) in one of the edges.

## Patentansprüche

1. Intelligenter Dosiermechanismus mit an eine Feststoffpartikel-Abgabevorrichtung (4) anpassbaren Einrichtungen, mit einem Körper und einer Antriebswelle,
wobei der Mechanismus eine mit einer Propellervorrichtung (2) und einer Stabilisatorvorrichtung (3) kombinierte Reduziervorrichtung (1) umfasst, wobei die Reduziervorrichtung (1) einen Außendurchmesser aufweist, der proportional zur Innenabmessung des Körpers der Abgabevorrichtung (4) ist; so dass die Größe und die Form der mit der Abgabevorrichtung (4) zu koppelnden Reduziervorrichtung (1) dem Durchmesser und dem inneren Format des Körpers der Abgabevorrichtung (4) folgt;
wobei der intelligente Dosiermechanismus Folgendes umfasst:
- die Propellervorrichtung (2), die mit der Antriebswelle (5) der Abgabevorrichtung verbunden ist,
- die Reduziervorrichtung (1), die mit einem inneren Teil des Körpers der Abgabevorrichtung (4) rund um die Propellervorrichtung (2) verbunden ist, um den Raum zwischen der Propellervorrichtung und dem Körper der Abgabevorrichtung zu verkleinern, und
- die Stabilisatorvorrichtung (3), **dadurch gekennzeichnet, dass** die Stabilisatorvorrichtung in der Propellervorrichtung (2) angeordnet ist, die an einer Düse (11) befestigt und in der Propellervorrichtung (2) angeordnet ist, um den Strom des dosierten Produkts zu stabilisieren.

2. Intelligenter Dosiermechanismus nach Anspruch 1, **dadurch gekennzeichnet, dass** die Abgabevorrichtung (4) die an dem Körper befestigte Düse (11) umfasst.

3. Intelligenter Dosiermechanismus nach einem der vorstehenden Ansprüche, **dadurch gekennzeichnet, dass** die Reduziervorrichtung (1) ausgeschnittene Kanten, Wände und eine glatte Innenwand (18) aufweist.

4. Intelligenter Dosiermechanismus nach einem der vorstehenden Ansprüche, **dadurch gekennzeichnet, dass** die Reduziervorrichtung (1) eine Barriere (16) aufweist, die senkrecht zur Antriebswelle (5) der Abgabevorrichtung steht.

5. Intelligenter Dosiermechanismus nach einem der vorstehenden Ansprüche, **dadurch gekennzeichnet, dass** die Reduziervorrichtung (1) eine mit einer Vorderwand (19) geschlossene Kante und eine ausgeschnittene Kante sowie eine parallel zur Antriebswelle (5) der Abgabevorrichtung (4) verlaufende Öffnung (17) aufweist.

6. Intelligenter Dosiermechanismus nach einem der vorstehenden Ansprüche, **dadurch gekennzeichnet, dass** die Reduziervorrichtung (1) Rippen auf ihrer Außenwand (15) aufweist, die den gesamten Umfang einer Innenbeschichtung (7) der Abgabevorrichtung (4) umrunden.

7. Intelligenter Dosiermechanismus nach einem der vorstehenden Ansprüche, **dadurch gekennzeichnet, dass** die Reduziervorrichtung (1) ein Block-Anschlussstück (12) umfasst, welches das Blockieren der Bewegung der reduzierten Vorrichtung ermöglicht, wenn die reduzierte Vorrichtung in Gebrauch ist.

8. Intelligenter Dosiermechanismus nach einem der vorstehenden Ansprüche, **dadurch gekennzeichnet, dass** die Propellervorrichtung (2) eine Wendelform aufweist, deren Durchmesser mit der Abmessung einer Innenwand (18) der Reduziervorrichtung (1) und der Außenabmessung der rohrförmigen Basis (20) der Stabilisatorvorrichtung (3) kompatibel ist.

9. Intelligenter Dosiermechanismus nach einem der vorstehenden Ansprüche, **dadurch gekennzeichnet, dass** die wendelförmige Propellervorrichtung (2) flache, halbkreisförmige, profilierte Schraubenwendeln (23) aufweist.

10. Intelligenter Dosiermechanismus nach einem der vorstehenden Ansprüche, **dadurch gekennzeichnet, dass** die Propellervorrichtung (2) einen variablen Abstand zwischen den Schraubenwendeln (23) aufweist.

11. Intelligenter Dosiermechanismus nach einem der Ansprüche 1 bis 6, **dadurch gekennzeichnet, dass** die Propellervorrichtung (2) eine Schneckenradmutter umfasst.

12. Intelligenter Dosiermechanismus nach einem der vorstehenden Ansprüche, **dadurch gekennzeichnet, dass** die Stabilisatorvorrichtung (3) eine Zylinderform aufweist.

13. Intelligenter Dosiermechanismus nach Anspruch 12, **dadurch gekennzeichnet, dass** die Stabilisatorvorrichtung (3) eine Röhrenform (20) mit einer Rückhaltekappe (21) und einer Klemme (22) an einer der Kanten aufweist.

## Revendications

1. Mécanisme de dosage intelligent avec dispositifs adaptables à un distributeur de particules solides (4) équipé d'un corps et d'un arbre d'entraînement
où le mécanisme comprend un dispositif réducteur (1) associé à un dispositif propulseur (2) et à un dispositif stabilisateur (3),
où le dispositif réducteur (1) a un diamètre externe proportionnel aux dimensions internes du corps du distributeur (4) ; de sorte que les dimensions et la forme du dispositif réducteur (1) qui doit être couplé au distributeur (4) a le même diamètre et format interne du corps du distributeur (4) ;
le mécanisme de dosage intelligent comprenant:
- le dispositif propulseur (2) relié à l'arbre d'entraînement (5) du distributeur,
- le dispositif réducteur (1) couplé à une partie interne du corps du distributeur (4) autour du dit dispositif propulseur (2) pour réduire l'écart entre le dispositif propulseur et le corps du distributeur, et
- le dispositif stabilisateur (3) **caractérisé par** le dispositif stabilisateur disposé dans le dispositif propulseur (2) fixé à un gicleur (11) et disposé dans le dispositif propulseur (2) pour stabiliser le flux du produit dosé.

2. Mécanisme de dosage intelligent selon la revendication 1, **caractérisé en ce que** le distributeur (4) comprend le gicleur (11) fixé au corps.

3. Mécanisme de dosage intelligent selon l'une quelconque des revendications précédentes, **caractérisé en ce que** ledit dispositif réducteur (1) a des bords découpés, des cloisons et une cloison lisse (18).

4. Mécanisme de dosage intelligent selon l'une quelconque des revendications précédentes, **caractérisé en ce que** ledit dispositif réducteur (1) a une barrière (16) perpendiculaire à l'arbre d'entraînement (5) du distributeur.

5. Mécanisme de dosage intelligent selon l'une quelconque des revendications précédentes, **caractérisé en ce que** ledit dispositif réducteur (1) a un bord fermé avec une cloison avant (19) et une découpe de paroi, ainsi qu'une ouverture (17) parallèle à l'arbre d'entraînement (5) du distributeur (4).

6. Mécanisme de dosage intelligent selon l'une quelconque des revendications précédentes, **caractérisé en ce que** ledit dispositif réducteur (1) a des nervures sur sa cloison externe (15) qui entourent toute la périphérie d'un revêtement (7) interne du distributeur (4).

7. Mécanisme de dosage intelligent selon l'une quelconque des revendications précédentes, **caractérisé en ce que** ledit dispositif réducteur (1) comprend un raccord de blocage (12) qui permet de bloquer le mouvement du dispositif réducteur quand celui-ci est utilisé.

8. Mécanisme de dosage intelligent selon l'une quelconque des revendications précédentes, **caractérisé en ce que** ledit dispositif propulseur (2) a une forme hélicoïdale, avec un diamètre compatible avec la mesure d'une cloison interne (18) du dispositif réducteur (1) et la mesure externe d'une base tubulaire (20) du dispositif stabilisateur (3).

9. Mécanisme de dosage intelligent selon l'une quelconque des revendications précédentes, **caractérisé en ce que** ledit dispositif propulseur (2) à forme hélicoïdale a des hélices plates ayant un profil demi-circulaire (23).

10. Mécanisme de dosage intelligent selon l'une quelconque des revendications précédentes, **caractérisé en ce que** ledit dispositif propulseur (2) a une distance variable entre les hélices (23).

11. Mécanisme de dosage intelligent selon l'une quelconque des revendications de 1 à 6, **caractérisé en ce que** ledit dispositif propulseur (2) comprend un engrenage à vis sans fin.

12. Mécanisme de dosage intelligent selon l'une quelconque des revendications précédentes, **caractérisé en ce que** ledit dispositif stabilisateur (3) a une forme cylindrique.

13. Mécanisme de dosage intelligent selon la revendication 12, **caractérisé en ce que** ledit dispositif stabilisateur (3) a une forme tubulaire (20) avec un bouchon de retenue (21) et un collier (22) dans l'un des bords.
